# EUROPEAN PATENT SPECIFICATION

(11) **EP 4 051 578 B1**
(45) Date of publication and mention of the grant of the patent: **15.11.2023**
(21) Application number: 20807875.8
(22) Date of filing: 28.10.2020
(51) Int. Cl.: B64C 1/14, E05B 85/00

(54) **AIRCRAFT DOOR HANDLE WITH LIMITED APPLICABLE LOAD**
FLUGZEUGTÜRGRIFF MIT BESCHRÄNKTER ANWENDBARER LAST
POIGNÉE DE PORTE D'AÉRONEF À CHARGE APPLICABLE LIMITÉE

(30) Priority: 29.10.2019 IT 201900019934
(43) Date of publication of application: 07.09.2022
(73) Proprietor: Leonardo S.p.A., 00195 Roma (IT)
(72) Inventor: CASCONE, Rosario, 80065 Sant'Agnello (Napoli) (IT); GUERCIA, Angelo, 80034 Marigliano (Napoli) (IT); RINALDI, Ernesto, 84043 Agropoli (Salerno) (IT); TRINCHILLO, Angelo, 80018 Mugnano Di Napoli (Napoli) (IT)
(74) Representative: Fioravanti, Corrado
(86) International application number: PCT/IB2020/060070
(87) International publication number: WO 2021/084423

(56) References cited:
- EP-A2- 0 743 240
- CN-A- 109 469 405
- US-A1- 2008 210 823
- US-A1- 2017 137 147
- US-B1- 6 343 815

## Description

### Technical field

The present invention relates to a handle having a limited applicable load for a door of a means of transportation, in particular but not exclusively a cargo door of an aircraft.

### Prior art

The door mechanisms used on means of transportation, and in particular those in the aeronautical field, are subject to structural checks under extraordinary conditions that rarely actually occur in operation. One of these, often the most stringent with regard to the sizing of the majority of the mechanical components, is that of abnormal locking for extemporaneous reasons and simultaneous forcing of the handle by the operator in an attempt to overcome accidental resistance (see e.g. the disclosure of document US6343815). In fact, it may happen that, for various reasons, the handle of a door or hatch of an aircraft or other means of transportation remains locked, for example due to the presence of foreign objects inside the mechanism.

In the absence of a valid reason for limiting the maximum applicable load, which is often impossible to support with regard to the potential applicable case, the certification standards prescribe very high stress levels to be considered on the handle, meaning that all of the parts involved in the transmission of the motion are subsequently oversized. This problem is particularly sensitive in applications in which the weight and dimensions are important factors with regard to the expected result.

The certification standards in the aeronautical field provide a means of verifying the resistance of the mechanisms of the doors of means of transportation in extraordinary non-operating conditions of unexpected locking, in relation to which a forcing action on the handle is carried out by the operator in an attempt to resolve the impasse. In order for the handle to comply with the maximum loads imposed by the certification standards, the mechanism of the handle is oversized, which subsequently increases the costs, weight and occupied useful space.

The present invention proposes limiting the maximum load which can be applied to a handle by using a sacrificial element.

In the field of mechanical fuses, patent publication US 2017/0137147 A1 relates to a configuration of sacrificial pins with distinctive physical elements which make the installation unique and prevent incorrect assembly.

### Summary of the invention

The object of the present invention is therefore that of providing a handle equipped with a mechanical load limiting device which allows less onerous sizing to be used, without compromising the functionality of the product since the limiting device does not intervene in operating conditions.

The aforesaid and other objects and advantages, which will be better understood in the following, are achieved, according to the present invention, by a controllable handle having the features set out in the appended independent claim 1. According to a further aspect, the invention relates to an aircraft which has at least one door comprising a handle as defined in claim 1. Advantageous embodiments of the invention are specified in the dependent claims, the content of which is to be understood as an integral part of the description that follows.

In summary, according to one aspect of the present invention, a handle is provided for opening and closing a door of a means of transportation, in particular an aircraft. The handle comprises:
a base part, lockable to a rotatable shaft of an opening mechanism of the door;
a hand gripping part, connected to the base part;
a hinge connecting the base part to the gripping part to allow relative rotation of the gripping part with respect to the base part about a first axis;
a plurality of seats, of which at least one seat is integral with the base part and at least one other seat is integral with the gripping part, the seats being adjacent and aligned along a second axis substantially parallel to the first axis;
a mechanical fuse element of constraint received in the seats, such that by applying to the gripping part a bending stress around the hinge greater than a predetermined threshold, the element of constraint shears between the seats.

### Brief description of the drawings

The features of some preferred embodiments of a roller unit according to the invention will now be described. Reference is made to the appended drawings, in which:
Fig. 1 is a perspective view of a fuselage trunk which comprises a handle according to the present invention;
Fig. 2 is a partial vertical sectional view of a handle which is shown in two different operating positions with respect to an outer wall of an aircraft;
Fig. 3 is a perspective view of a handle according to one embodiment of the present invention, in an intact condition;
Fig. 4 is a sectional view of the handle in Fig. 3 in a damaged condition;
Fig. 5 is a perspective view of the side of a handle that faces the inside of the aircraft;
Fig. 6 is an exploded perspective view of the handle in Fig. 5;
Fig. 7 is a sectional view of the handle in Fig. 5, in an intact condition;
Fig. 8 is a sectional view of the handle in Fig. 7, in a damaged condition; and
Fig. 9 is a sectional view of the handle in Fig. 7, in a damaged condition different to that in Fig. 8.

### Detailed description

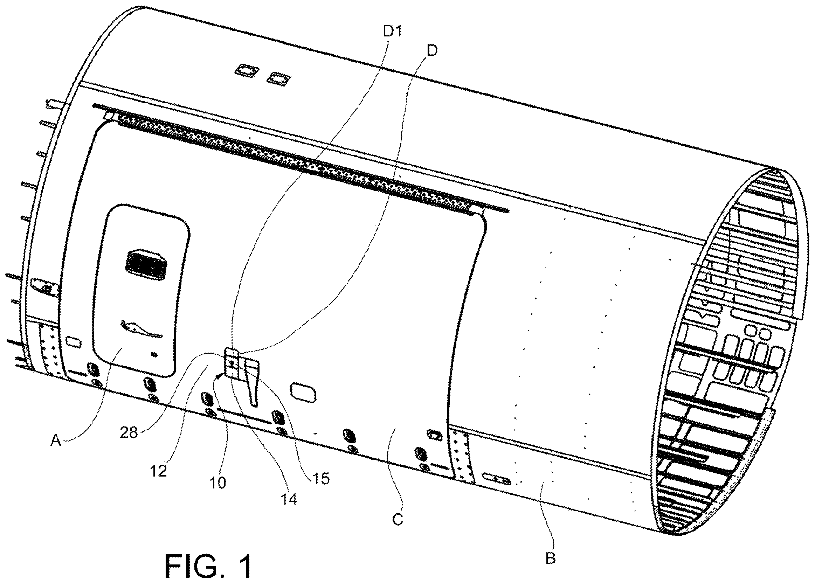

Referring initially to Fig. 1, the reference sign 10 indicates as a whole a handle for opening a door, for example a cargo door C on a means of transportation, typically on an aircraft, of which aircraft a fuselage section B is shown in Fig. 1.

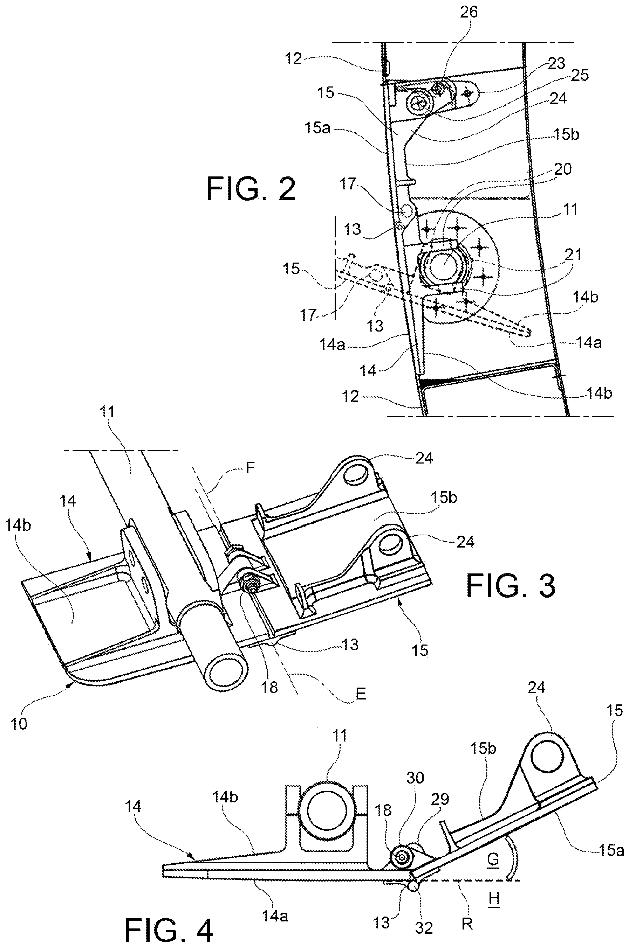

The handle 10 is mounted on a rotatable shaft 11 (Fig. 2) of a latch mechanism for opening and closing the cargo door C. In Fig. 2, the handle 10 is shown in two different operating positions. The handle 10 may be rotated integrally together with the shaft 11 between a closed position, in which the handle is flush with an outer surface 12 of the means of transportation, and an open position, in which the handle forms an angle other than 180° with respect to the outer surface 12.

The positioning of the handle 10 may vary depending on the applications. In the example shown in Fig. 1, the handle 10 is mounted on the cargo door C of the means of transportation. In other applications, the handle 10 may be used to open, for example, a door A located in a remote position with respect to the handle 10. In certain applications, the handle 10 may therefore be mounted directly on the door (C or A) to be opened; in other applications, the handle may be mounted on a fixed outer wall of the means of transportation, for example on the fuselage B or on other parts of the aircraft having an outer surface 12, i.e. facing the outside of the means of transportation. The positioning and the type of door, as well as the positioning of the handle with respect to the door that said handle has to open, are not intended to be limiting aspects of the present invention.

In this context, the terms and the expressions which indicate positions and orientations such as "outer" and "inner" are intended to refer to the internal and external sides of a wall of a means of transportation such as, in particular, the fuselage of an aircraft.

Referring also to Fig. 3 and 4, the handle 10 is divided into two parts connected together by a hinge 13: a base part 14, integrally lockable to the rotatable shaft 11 of the latch mechanism, and a hand gripping part 15.

Both the base part 14 and the hand gripping part 15 of the handle 10 are designed as plates, each having a relevant outer surface 14a, 15a, which, when in use, faces toward the outside of the means of transportation, and respective opposite inner surfaces 14b, 15b, which, when in use, face toward the inside of the means of transportation.

The outer surfaces 14a, 15a are preferably smooth and substantially planar or slightly curved following the aerodynamic profile of the outer surface 12 of the means of transportation on which the handle is applied.

In the example in Fig. 1, the handle 10 is accommodated in a compartment D made in the outer wall of the aircraft. The handle 10 occupies the lower and central part of the compartment D, while a top part or window D1 of the compartment D is accessible in order to allow an operator to insert their hand into it to grasp the handle, according to a configuration known per se. The top window D1 of the compartment D is normally closed by an openable cover or hatch, which is preferably held in position by resilient elements. In the example shown here, the base part 14 is arranged lower than the gripping part 15, such that the handle is opened by pulling it outward and downward.

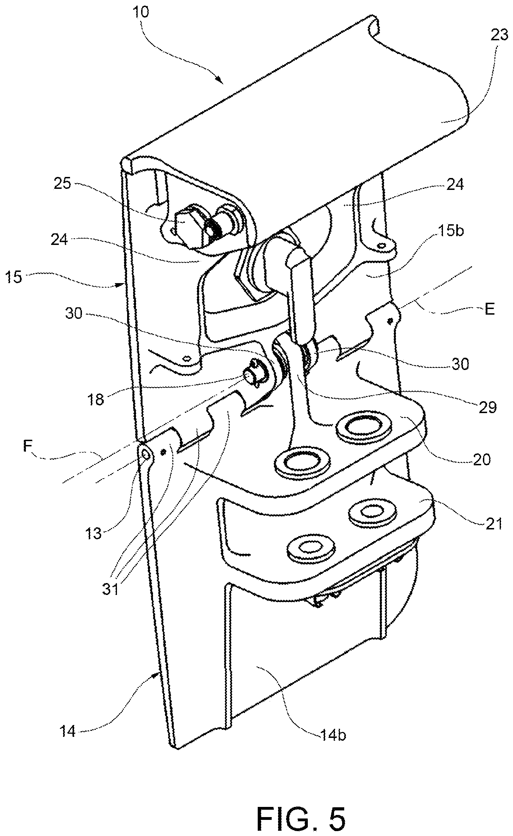

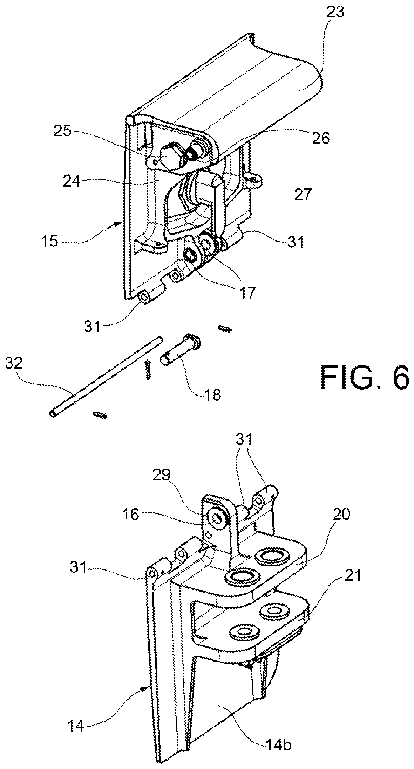

As shown in Fig. 5 and 6, the inner surfaces 14b and 15b may have a plurality of formations and elements which are also already present per se on traditional single piece handles. In particular, the base part 14 may form a pair of parallel plate formations 20, 21 or other constraint formations suitable for locking the shaft 11 therebetween. The gripping part 15 may have bracket formations 24 on which a manual grip 23 is mounted in an oscillating manner about a pin 25 in order to release a stop 26 which engages in a contact (not shown) of the wall in which the handle is mounted. A latch 27 may be provided which may be actuated by inserting a key into an outer keyhole 28 (Fig. 1) in order to preliminarily unlock the handle.

The hinge 13 is designed per se to allow relative rotation of the hand gripping part of the handle with respect to the first part about a first axis E. However, in normal operating conditions with the handle intact, the hand gripping part is not rotatable with respect to the base part 14 of the handle. In fact, a further constraint is provided which is breakable (described below) and which connects the base part and the hand gripping part together, keeping the hand gripping part 15 coplanar with the base part 14. In normal operating conditions, the two parts 14 and 15 are fixed to one another and move together in rotation with the shaft 11. The inclined position assumed by the handle 10 can be seen in particular in Fig. 2.

In a normal operating condition, the outer surfaces 14a and 15a are coplanar. When the handle is in the closed position, the surfaces 14a and 15a are coplanar (Fig. 1, 3, 5 and 7) and flush with the outer surface 12 of the means of transportation.

The base part 14 and the hand gripping part 15 each have one or more seats 16, 17 (Fig. 6), for example cylindrical seats, which are aligned in a normal operating condition along at least one second axis F that is parallel and spaced apart from the first geometric axis E of the hinge 13.

According to one embodiment, the axes E and F are located at different distances with respect to a reference surface R (Fig. 4) that is identified by the grip part 14 of the handle, for example with respect to the outer surface 14a of the handle.

The seats 16, 17 comprised by the two parts 14 and 15 are preferably consecutive or adjacent and alternate along the axis F.

The seats of the two parts 14 and 15 together receive a mechanical fuse element 18 of constraint, or sacrificial element, preferably in the form of a pin. Together with the hinge 13, the element 18 of constraint received in the seats 16, 17 prevents relative movements between the two parts 14 and 15. More particularly, the thrust imparted to the gripping part 15 from the handle causes a bending stress on the hinge 13; this bending stress is counteracted by the hinge 13 together with the element 18 of constraint held in the seats 16 and 17, until a threshold force is reached. Once this force has been exceeded, when the stress imparted to the gripping part 14 exceeds a predetermined threshold, the element 18 of constraint shears between the seats 16 and 17 of the two different parts making up the handle. The shearing occurs because the hinge 13, which is more resistant than the element 18 of constraint, constitutes a fulcrum point about which the gripping part 15 rotates with respect to the base part 14, and therefore the seats 16 and 17, which are respectively integral with the base part 14 and the gripping part 15, shear the mechanical element 18 of constraint.

As a result of the mechanical fuse element of constraint breaking, an excessive stress for opening or closing the handle is not transmitted to the latch mechanism for opening and closing the door, the mechanism of which is therefore not damaged.

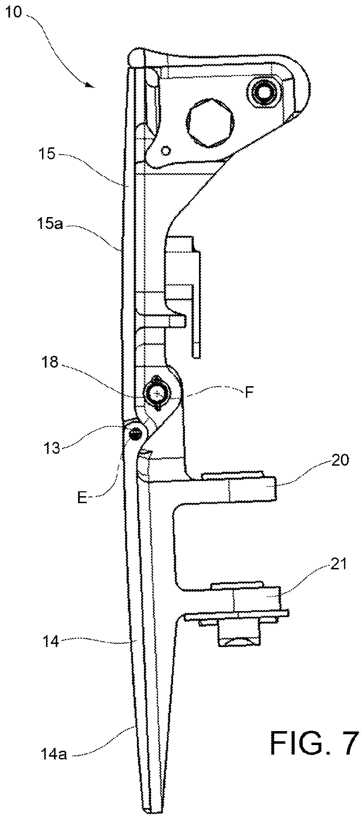

Once the element 18 of constraint is broken, the gripping part 15 remains rotated with respect to the base part 14, such that the outer surfaces 14a and 15a form an obtuse angle (Fig. 4, 8 and 9) and are no longer flush with one as an extension of the other (Fig. 7). When the element 18 of constraint is broken (Fig. 4, 8 and 9), the broken condition is evident to an observer. The ability to modify the geometric shape above a certain load level acts as a means of signaling irregularities and prevents operation from continuing without first solving the defect that has occurred.

From an aerodynamic point of view, it is advantageous that the seats 16 and 17 do not protrude outwardly with respect to the profile of the outer surface 12 of the means of transportation.

In the particular embodiments shown in the drawings, the seats 16 and 17 are made from eyelets 29, 30, which are formed respectively by the base part 14 and the hand gripping part 15 and project toward the inside of the means of transportation from the surfaces 14b, 15b facing the inside of the means of transportation.

The hinge 13 may be in the form of a comb hinge, with seats 31 formed directly by the two parts 14 and 15 (Fig. 5 and 6), or by separate hinge elements applied to the parts 14 and 15 of the handle (Fig. 3 and 4). In Fig. 6, the reference sign 32 denotes a cylindrical rod which is part of the hinge 13 and extends along the geometric axis E.

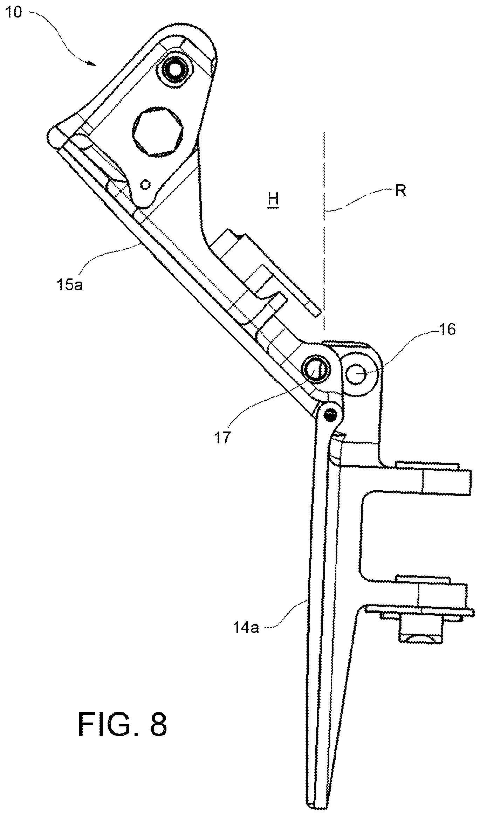

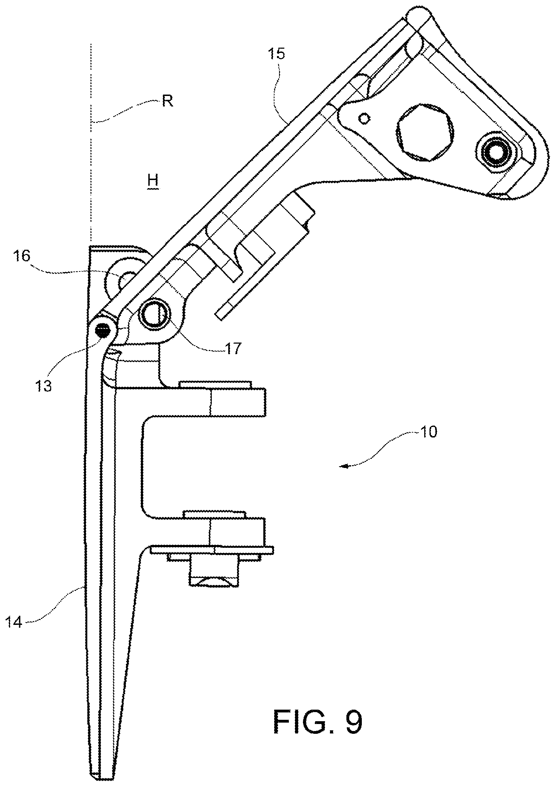

Preferably, the hinge 13 is designed per se to allow the gripping part 15 to rotate on both opposite sides (G, H; Fig. 4, 8 and 9) with respect to the geometric reference plane R in which the outer surface 14a of the base part 14 of the handle extends. In other words, the hinge 13 preferably allows the gripping part 15 to break the element 18 of constraint both when the handle is forced open, namely by pulling the gripping part 15 away from the outer surface 12 of the aircraft (Fig. 8), and when the handle is forced closed, by pushing the gripping part 15 toward the outer surface 12 with excessive force (Fig. 9).

As will be appreciated, the present invention may be easily adapted to application contexts, geometric configurations and different load limits by means of suitably dimensioning the diameter of the sacrificial pin, selecting the material thereof and positioning the two hinges. Any possible need for introduction on existing products may also be satisfied by replacing only the handle with a new one, since the impact of the modification is theoretically limited only to this one. Furthermore, the embodiments and the details of construction may be widely varied with respect to that which has been described and illustrated purely by way of non-limiting example, without thereby departing from the scope of the invention, as defined in the appended claims. For example, according to other less preferred embodiments which are not shown, the seats 16 and 17 which receive the mechanical fuse element 18 of constraint may be aligned along further axes that are substantially parallel, and the element 18 of constraint may have a pin shape that is not rectilinear.

## Claims

1. A handle (10) for opening and closing a door (C, A) of a means of transportation, particularly an aircraft, the handle (10) comprising:
a base part (14), lockable to a rotatable shaft (11) of an opening mechanism of the door (C, A);
a hand gripping part (15), connected to the base part (14);
a hinge (13) connecting the base part (14) to the gripping part (15) to allow relative rotation of the gripping part (15) with respect to the base part (14) about a first axis (E);
a plurality of seats (16, 17), of which at least one seat (16) is integral with the base part (14) and at least one seat (17) is integral with the gripping part (15), **characterized by**:
the seats (16, 17) being adjacent and aligned along a second axis (F) substantially parallel to the first axis (E);
a mechanical fuse element (18) of constraint received in the seats (16, 17), such that by applying to the gripping part (15) a bending stress around the hinge (13) greater than a predetermined threshold, the mechanical fuse element (18) of constraint shears between the seats (16 and 17).

2. A handle (10) according to claim 1, wherein at least one seat (16 or 17) integral with one of the two base or grip parts (14 or 15) of the handle is interposed between two seats (17 or 16) integral with the other one (15 or 14) of the two grip or base parts of the handle.

3. A handle (10) according to claim 1 or 2, having a normal operating configuration, in which the mechanical fuse element (18) of constraint is intact and received in said seats (16, 17) and the base part (14) and the gripping part (15) have respective coplanar surfaces (14a, 15a), facing in use towards the outside of an aircraft or other means of transportation on which the handle (10) is mounted.

4. A handle according to any one of the preceding claims, wherein the seats (16) and (17) do not protrude outwardly with respect to surfaces (14a, 15a) of the base and gripping parts (14, 15) intended to face in use the outside of the means of transportation.

5. A handle according to any one of the preceding claims, wherein the seats (16) and (17) are made in eyelets (29, 30) formed respectively by the base part (14) and the gripping part (15), and projecting from respective surfaces (14b, 15b) of the base part (14) and gripping part (15) facing in use the inside of the means of transportation.

6. A handle according to any one of the preceding claims, wherein the axes (E) and (F) are located at different distances with respect to a reference surface (R) identified by a surface (14a) of the gripping part (14) of the handle intended to be facing in use towards the outside of the means of transportation.

7. A handle according to any one of the preceding claims, wherein the hinge (13) is configured to allow the gripping part (15) to rotate on both opposite sides (G, H) with respect to a geometric reference plane (R) in which a surface (14a) of the gripping part (14) of the handle extends, the surface being intended to be facing in use the outside of the means of transportation.

8. A handle according to any one of the preceding claims, wherein the mechanical fuse element (18) of constraint is in the form of a pin.

9. A handle according to any one of the preceding claims, wherein the seats (16, 17) have a cylindrical shape.

10. Aircraft, comprising:
a wall having an outer surface (12) facing the outside of the aircraft,
a door (C, A) formed in the surface (12),
a handle (10) according to any one of the preceding claims, for opening and closing the door (C, A);
the handle being able to take the following arrangements:
a closed, intact condition of the handle (10), with the element (18) of constraint intact, in which condition the base part (14) and gripping part (15) have respective outer surfaces (14a, 15a) arranged coplanar and flush with the outer surface (12) of the aircraft;
an open, intact condition of the handle (10), with the element (18) of constraint intact, in which condition the base part (14) and gripping part (15) have respective outer surfaces (14a, 15a) arranged coplanar and forming an angle other than 180 degrees with the outer surface (12) of the aircraft;
a damaged handle (10) condition, with the element (18) of constraint broken, in which condition the base part (14) and gripping part (15) have respective outer surfaces (14a, 15a) forming an angle between them other than 180 degrees, and wherein at least one of the two outer surfaces (14a, 15a) forms an angle other than 180 degrees with the outer surface (12) of the aircraft.

## Patentansprüche

1. Griff (10) zum Öffnen und Schließen einer Tür (C, A) eines Transportmittels, insbesondere eines Flugzeugs, wobei der Griff (10) aufweist:
ein Basisteil (14), das mit einer drehbaren Welle (11) eines Öffnungsmechanismus der Tür (C, A) verriegelbar ist;
ein Handgriffteil (15), das mit dem Basisteil (14) verbunden ist;
ein Scharnier (13), welches das Basisteil (14) mit dem Griffteil (15) verbindet, um eine relative Drehung des Griffteils (15) in Bezug auf das Basisteil (14) um eine erste Achse (E) zu ermöglichen;
eine Vielzahl von Sitzen (16, 17), von denen mindestens ein Sitz (16) mit dem Basisteil (14) einstückig ist und mindestens ein Sitz (17) mit dem Griffteil (15) einstückig ist, **dadurch gekennzeichnet, dass**:
die Sitze (16, 17) zueinander benachbart und entlang einer zweiten Achse (F) ausgerichtet sind, die im Wesentlichen parallel zu der ersten Achse (E) verläuft;
ein mechanisches Einschränkungs-Sicherungselement (18), das in den Sitzen (16, 17) derart aufgenommen ist, dass durch Aufbringen einer Biegespannung um das Scharnier (13), die größer ist als ein vorbestimmter Schwellenwert, auf das Greifteil (15) das mechanische Einschränkungs-Sicherungselement (18) zwischen den Sitzen (16 und 17) abschert.

2. Griff (10) nach Anspruch 1, wobei mindestens ein Sitz (16 oder 17), der mit einem der beiden, dem Basis- oder dem Griffteil (14 oder 15) des Griffs einstückig ist, zwischen zwei Sitzen (17 oder 16) angeordnet ist, die mit dem anderen (15 oder 14) der beiden, dem Griff- oder dem Basisteil des Griffs einstückig sind.

3. Griff (10) nach Anspruch 1 oder 2 mit einer Normalbetriebskonfiguration, bei der das mechanische Einschränkungs-Sicherungselement (18) intakt und in den Sitzen (16, 17) aufgenommen ist und das Basisteil (14) und das Griffteil (15) jeweilige koplanare Flächen (14a, 15a) aufweisen, die im Gebrauch der Außenseite eines Flugzeugs oder eines anderen Transportmittels zugewandt sind, an dem der Griff (10) montiert ist.

4. Griff nach einem der vorhergehenden Ansprüche, wobei die Sitze (16) und (17) nicht nach außen in Bezug auf Flächen (14a, 15a) des Basis- und des Griffteils (14, 15) vorstehen, die im Gebrauch der Außenseite des Transportmittels zugewandt sein sollen.

5. Griff nach einem der vorhergehenden Ansprüche, wobei die Sitze (16) und (17) in Ösen (29, 30) ausgebildet sind, die durch das Basisteil (14) bzw. das Griffteil (15) gebildet sind, und von jeweiligen Flächen (14b, 15b) des Basisteils (14) und des Griffteils (15) vorstehen, die im Gebrauch der Innenseite des Transportmittels zugewandt sind.

6. Griff nach einem der vorhergehenden Ansprüche, wobei sich die Achsen (E) und (F) in unterschiedlichen Abständen in Bezug auf eine Bezugsfläche (R) befinden, die durch eine Fläche (14a) des Griffteils (14) des Griffs identifiziert wird, die im Gebrauch der Außenseite des Transportmittels zugewandt ist.

7. Griff nach einem der vorhergehenden Ansprüche, wobei das Scharnier (13) konfiguriert ist, es dem Griffteil (15) zu ermöglichen, sich auf beiden gegenüberliegenden Seiten (G, H) in Bezug auf eine geometrische Bezugsebene (R) zu drehen, in der sich eine Fläche (14a) des Griffteils (14) des Griffs erstreckt, wobei die Fläche im Gebrauch der Außenseite des Transportmittels zugewandt sein soll.

8. Griff nach einem der vorhergehenden Ansprüche, wobei das mechanische Einschränkungs-Sicherungselement (18) in Form eines Stifts vorliegt.

9. Griff nach einem der vorhergehenden Ansprüche, wobei die Sitze (16, 17) eine zylindrische Form aufweisen.

10. Flugzeug, aufweisend:
eine Wand mit einer der Außenseite des Flugzeugs zugewandten Außenfläche (12),
eine in der Fläche (12) ausgebildete Tür (C, A),
einen Griff (10) nach einem der vorhergehenden Ansprüche zum Öffnen und Schließen der Tür (C, A);
wobei der Griff die folgenden Anordnungen einnehmen kann:
einen geschlossenen, intakten Zustand des Griffs (10) mit intaktem Einschränkungselement (18), in dem das Basisteil (14) und das Griffteil (15) jeweilige Außenflächen (14a, 15a) aufweisen, die koplanar und bündig mit der Außenfläche (12) des Flugzeugs angeordnet sind;
einen offenen, intakten Zustand des Griffs (10) mit intaktem Einschränkungselement (18), wobei das Basisteil (14) und das Griffteil (15) jeweilige Außenflächen (14a, 15a) aufweisen, die koplanar angeordnet sind und einen anderen Winkel als 180 Grad mit der Außenfläche (12) des Flugzeugs bilden;
einen Zustand mit beschädigtem Griff (10) mit kaputtem Einschränkungselement (18), in dem das Basisteil (14) und das Griffteil (15) jeweilige Außenflächen (14a, 15a) aufweisen, die einen anderen Winkel als 180 Grad zwischen ihnen bilden, und wobei mindestens eine der beiden Außenflächen (14a, 15a) einen anderen Winkel als 180 Grad mit der Außenfläche (12) des Flugzeugs bildet.

## Revendications

1. Poignée (10) pour l'ouverture et la fermeture d'une porte (C, A) d'un moyen de transport, en particulier d'un aéronef, la poignée (10) comprenant :
une partie de base (14) verrouillable sur un arbre rotatif (11) d'un mécanisme d'ouverture de la porte (C, A) ;
une partie de préhension de la main (15) reliée à la partie de base (14) ;
une articulation (13) reliant la partie de base (14) à la partie de préhension (15) pour permettre la rotation relative de la partie de préhension (15) par rapport à la partie de base (14) autour d'un premier axe (E) ;
une pluralité de sièges (16 ,17), dont au moins un siège (16) est d'un seul tenant avec la partie de base (14) et au moins un siège (17) est d'un seul tenant avec la partie de préhension (15), **caractérisée par** :
les sièges (16, 17) étant adjacents et alignés le long d'un second axe (F) sensiblement parallèle au premier axe (E) ;
un élément fusible mécanique (18) de contrainte reçu dans les sièges (16, 17) de sorte que, en appliquant à la partie de préhension (15) une force de flexion autour de l'articulation (13) supérieure à un seuil prédéterminé, l'élément fusible mécanique (18) de contrainte cisaille entre les sièges (16 et 17).

2. Poignée (10) selon la revendication 1, dans laquelle au moins un siège (16 ou 17) d'un seul tenant avec une des deux parties de base ou de préhension (14 ou 15) de la poignée est interposé entre deux sièges (17 ou 16) d'un seul tenant avec l'autre (15 ou 14) des deux parties de préhension ou de base de la poignée.

3. Poignée (10) selon la revendication 1 ou 2, ayant une configuration opérationnelle normale dans laquelle l'élément fusible mécanique (18) de contrainte est intact et reçu dans lesdits sièges (16, 17), et la partie de base (14) et la partie de préhension (15) comprennent des surfaces coplanaires (14a, 15a) respectives, tournées en utilisation vers le côté extérieur d'un aéronef ou d'un autre moyen de transport, sur lequel la poignée (10) est montée.

4. Poignée selon l'une quelconque des revendications précédentes, dans laquelle les sièges (16) et (17) ne dépassent pas vers l'extérieur par rapport aux surfaces (14a, 15a) des parties de base et de préhension (14, 15) destinées à être tournées en utilisation vers le côté extérieur du moyen de transport.

5. Poignée selon l'une quelconque des revendications précédentes, dans laquelle les sièges (16) et (17) sont réalisés dans des oeillets (29, 30) formés respectivement par la partie de base (14) et la partie de préhension (15), et faisant saillie des surfaces respectives (14b, 15b) de la partie de base (14) et la partie de préhension (15) tournées en utilisation vers l'intérieur du moyen de transport.

6. Poignée selon l'une quelconque des revendications précédentes, dans laquelle les axes (E) et (F) sont situés à différentes distances par rapport à une surface de référence (R) identifiée par une surface (14a) de la partie de préhension (14) de la poignée destinée à être tournée en utilisation vers l'extérieur du moyen de transport.

7. Poignée selon l'une quelconque des revendications précédentes, dans laquelle l'articulation (13) est configurée pour permettre à la partie de préhension (15) de tourner sur les deux côtés opposés (C, H) par rapport à un plan de référence géométrique (R) dans lequel une surface (14a) de la partie de préhension (14) de la poignée s'étend, la surface étant destinée à être tournée en utilisation vers le côté extérieur du moyen de transport.

8. Poignée selon l'une quelconque des revendications précédentes, dans laquelle l'élément fusible mécanique (18) de contrainte se présente sous la forme d'un axe.

9. Poignée (10) selon l'une quelconque des revendications précédentes, dans laquelle les sièges (16, 17) ont une forme cylindrique.

10. Aéronef comprenant :
une paroi ayant une surface extérieure (12) tournée vers le côté extérieur de l'aéronef,
une porte (C, A) formée dans la surface (12),
une poignée (10) selon l'une quelconque des revendications précédentes pour l'ouverture et la fermeture de la porte (C, A) ;
la poignée étant apte à prendre les agencements suivants :
une condition intacte fermée de la poignée (10), avec l'élément (18) de contrainte intact, dans laquelle condition la partie de base (14) et la partie de préhension (15) ont des surfaces extérieures (14a, 15a) respectives agencées de manière coplanaire et en alignement sur la surface extérieure (12) de l'aéronef ;
une condition intacte ouverte de la poignée (10), avec l'élément (18) de contrainte intacte, dans laquelle condition la partie de base (14) et la partie de préhension (15) ont des surfaces extérieures (14a, 15a) respectives agencées de manière coplanaire et formant un angle autre que 180 degrés avec la surface (12) extérieure de l'aéronef ;
une condition de poignée endommagée (10), avec l'élément (18) de contrainte brisé, dans laquelle condition la partie de base (14) et la partie de préhension (15) ont des surfaces extérieures (14a, 15a) respectives formant un angle entre elles autre que 180 degrés, et dans lequel au moins une des deux surfaces extérieures (14a, 15a) forme un angle autre que 180 degrés avec la surface extérieure (12) de l'aéronef.
